Europäisches Patentamt

European Patent Office

Office européen des brevets

(11) Veröffentlichungsnummer: **0 007 458**
A1

## (12) EUROPÄISCHE PATENTANMELDUNG

(21) Anmeldenummer: 79102172.8

(22) Anmeldetag: 29.06.79

(51) Int. Cl.³: **B 01 D 45/12**
B 01 D 21/26, B 04 C 5/04

(30) Priorität: 21.07.78 DE 2832097

(43) Veröffentlichungstag der Anmeldung:
06.02.80 Patentblatt 80/3

(84) Benannte Vertragsstaaten:
AT BE CH FR GB IT LU NL SE

(71) Anmelder: Messerschmitt-Bölkow-Blohm Gesellschaft mit beschränkter Haftung
Postfach 801109
D-8000 München 80(DE)

(72) Erfinder: Bielefeldt, Ernst-August
Kieferngrund 20
D-2114 Hollenstedt(DE)

(54) Verfahren und Einrichtung zum Stofftrennen mittels Fliehkraft.

(57) Die Erfindung bezieht sich auf ein Verfahren und eine Einrichtung zum Abscheiden des spezifisch schwereren Anteils aus einem Strom eines mit suspendierten Partikeln beladenen Mediums mittels Fliehkraft, bei dem der Strom zunächst umgelenkt wird und anschliessend im unmittelbaren Kontakt zum inneren Krümmungsbereich eine Wirbelscheidung mit einem in einer Wirbelkammer drehenden Wirbel (17) und zentraler Absaugung (8) des spezifisch leichteren Anteils erfolgt, wozu der Strom in einer sich über die gesamte Kammerbreite erstreckenden Tangentialströmung (12) in die Wirbelkammer eingeleitet wird und gereinigtes Medium, befreit von den abgetrennten Partikeln, die Wirbelkammer durch zwei spiegelbildlich in der Mitte der Wirbelkammer hineinragende Tauchrohre (8) verlässt.

Die Erfindung betrifft ein Verfahren und eine Einrichtung, wobei die abgetrennten Partikeln ohne Unterstützung durch eine Strömung direkt aus der Wirbelkammer in einen Bunker (7) gelangen. Die abzutrennenden Partikeln werden durch die Wirkung der Sekundärströmung mit axialer Richtungskomponente (18) durch in den axialen Begrenzungswänden (15) angeordnete Öffnungen (14) ohne eine von aussen wirkende Absaugung ausgetragen. Der Direktabscheider kann in einem Staubabscheidesystem mit Mehrfachwirbelkammern Anwendung finden.

./...

Fig.1

Fig.2

MESSERSCHMITT-BÖLKOW-BLOHM    - 1 -
GESELLSCHAFT
MIT BESCHRÄNKTER HAFTUNG
MÜNCHEN

Hamburg, 6.Juni 1979
8366
He

**Verfahren und Einrichtung zum Stofftrennen mittels Fliehkraft**

Die Erfindung bezieht sich auf ein Verfahren und eine Einrichtung zum Abscheiden des spezifisch schwereren Anteils aus einem Strom eines mit suspendierten Partikeln beladenen Mediums mittels Fliehkraft, bei dem der Strom zunächst umgelenkt wird und anschließend im unmittelbaren Kontakt zum inneren Krümmungsbereich eine Wirbelscheidung mit einem in einer Wirbelkammer drehenden Wirbel und zentraler Absaugung des spezifisch leichteren Anteils erfolgt wozu der Strom in einer sich über die gesamte Kammerbreite erstreckenden Tangentialströmung in die Wirbelkammer eingeleitet wird und gereinigtes Medium, befreit von den abgetrennten Partikeln, die Wirbelkammer durch zwei spiegelbildlich in die Mitte der Wirbelkammer hineinragende Tauchrohre verläßt. Ein einschlägiges Verfahren ist in der DE-PS 21 60 415 beschrieben und dargestellt. Bei diesem Verfahren werden die abgetrennten Partikeln mit einem tangential aus der Wirbelkammer austretenden Teilvolumenstrom des Mediums abgeführt. Insbesondere dann, wenn die mittels einer derartigen Einrichtung abgetrennten Partikeln gesammelt werden sollen, ergibt sich die Notwendigkeit, einen Direktabscheider nachzuschalten.

Demgemäß liegt der Erfindung die Aufgabe zugrunde, ein Verfahren und eine Einrichtung der eingangs genannten Art zu schaffen, wobei die abgetrennten Partikeln ohne Unterstützung durch eine Strömung direkt aus der Wirbelkammer in einen Bunker gelangen. Gelöst ist diese Aufgabe in einfacher Weise im wesentlichen dadurch, daß die abzutrennenden Partikeln durch die Wirkung der Sekundärströmung mit axialer Richtungskomponente durch in den axialen Begrenzungswänden angeordnete Öffnungen ohne eine von außen wirkende Absaugung ausgetragen werden. Damit ist ohne besonderen Aufwand ein Direktabscheider geschaffen, der sich vor allem günstig in ein Staubabscheidesystem mit Mehrfachwirbelkammern einfügt. Die erfindungsgemäße Einrichtung ist weiterhin als Zentrifuge, Hydro-Abscheider u.s.w. einsetzbar. Die genannte Einrichtung kann vorteilhafterweise mit einem Staubbunker in Verbindung stehen. Auch der Einsatz als Einzelgerät ist oft sehr sinnvoll.

Weitere Ausgestaltungen der Erfindung ergeben sich aus den weiteren Ansprüchen sowie aus der Figurenbeschreibung.

So kann es nützlich sein, wenn das zu behandelnde Medium mindestens einen Schälschlitz passiert, durch den Partikeln aus dem Medium abgeschieden werden können. Eine Einrichtung zur Durchführung des erfindungsgemäßen Verfahrens besteht vorteilhaft aus einer Wirbelkammer, deren axiale Begrenzungswände nahe der zylindrischen Wandung Austragöffnungen aufweisen. Eine Ausgestaltung der erfindungsgemäßen Einrichtung besteht darin, daß innerhalb der Wirbelkammer durch Anordnung eines bogenförmigen Teils ein Umlaufkanal gebildet wird.

Die Erfindung ist anhand von Beispielausführungen in der folgenden Zeichnungsbeschreibung näher erläutert. In schematischer Darstellung zeigen:

Fig. 1    den Querschnitt durch eine Abscheideeinrichtung gemäß der Erfindung (Schnitt A-A gemäß Fig.2);

Fig. 2    den Schnitt B-B gemäß Fig.1;

Fig. 3    den Querschnitt durch eine Variante der Erfindung (Schnitt D-D gemäß Fig.4);

Fig. 4    den Schnitt C-C gemäß Fig.3;

Fig. 5    eine Variante einer Abscheideeinrichtung nach Fig.4;

Fig. 6  die Einzelheit Y gemäß Fig.5;

Fig. 7  eine Variante zu den Figuren 1 und 3.

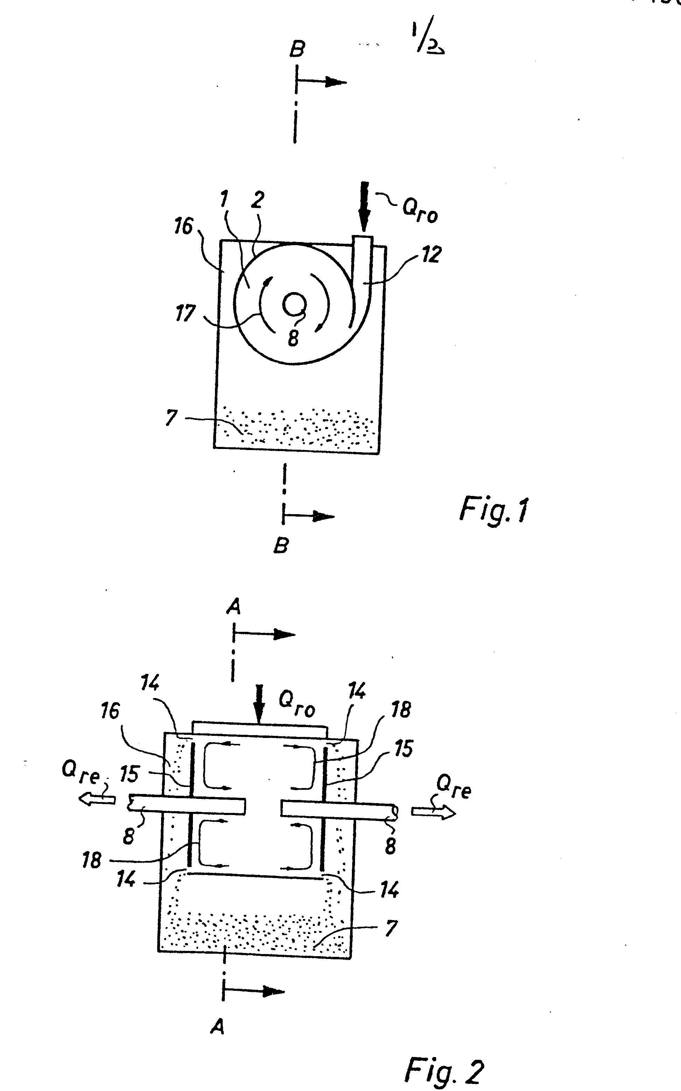

Die Figuren 1 und 2 zeigen eine Abscheideeinrichtung,im wesentlichen bestehend aus einer Wirbelkammer 1, die durch eine gekrümmte Wandung 2 und zwei axiale Begrenzungswände 15 gebildet
wird. Von außen ragen in diese Kammer zwei Tauchrohre 8 spiegelbildlich und koaxial hinein. Außerdem mündet ein über die gesamte Breite der Kammer reichender Einlaufkanal 12 tangential in
die Kammer ein. Die axialen Begrenzungswände weisen nahe der Wandung 2 Austragschlitze 14 auf. Die Wirbelkammer ist von einem
Auffanggehäuse 16 umgeben, das mit seinem unteren Bereich einen
Bunker 7 bildet. Wird nun durch den Kanal 12 z.B. ein mit suspendierten Partikeln beladener Strom eines Gases als Rohgasstrom $Q_{ro}$
eingeleitet, so entsteht innerhalb der Wirbelkammer 1 ein sehr
schnell drehender stehender Wirbel. Dieser Wirbel ist in Fig.1
durch die Pfeile 17 angedeutet. Infolge des Wirbels wird innerhalb der Wirbelkammer 1 eine Sekundärströmung induziert, die in
Fig.2 durch die Pfeile 18 dargestellt ist. Durch die innerhalb
des Wirbels wirkenden Fliehkräfte werden die im Medium mitgeführten Partikeln zur Wandung 2 verschoben. Hier werden sie von der
Sekundärströmung 18 erfaßt und in Richtung der axialen Begrenzungswände 15 transportiert. Im Bereich der Umlaufkanten zwischen der Wandung 2 und den axialen Begrenzungswänden 15 wird
die Strömung 18 um 90° umgelenkt. Hierbei werden die Partikeln
durch die Schlitze 14 aus der Wirbelkammer 1 ausgetragen. Sie bewegen sich dabei in etwa auf Tangenten an die Strömung 18 durch
die Austragschlitze 14. Nach dem Verlassen der Wirbelkammer fallen die Partikeln in den Bunker 7. Das gereinigte Gas verläßt
die Wirbelkammer durch die Tauchrohre 8 als Reingas-Strom $Q_{re}$.
Es hat sich gezeigt, daß auch feinste Partikeln abgeschieden werden, indem sie auf ihrem Weg, veranlaßt durch die Sekundärströmung 18, zu den Tauchrohrmündungen auf sich erweiternden Schraubenbahnen in den Wirbel 17 und damit sicher zur Wandung 2 gelangen,so daß sie nicht in den Sog der Tauchrohrmündungen gelangen
können. In der Umgebung der Tauchrohre befindet sich somit eine
sehr wirksame Feinabtrennzone.

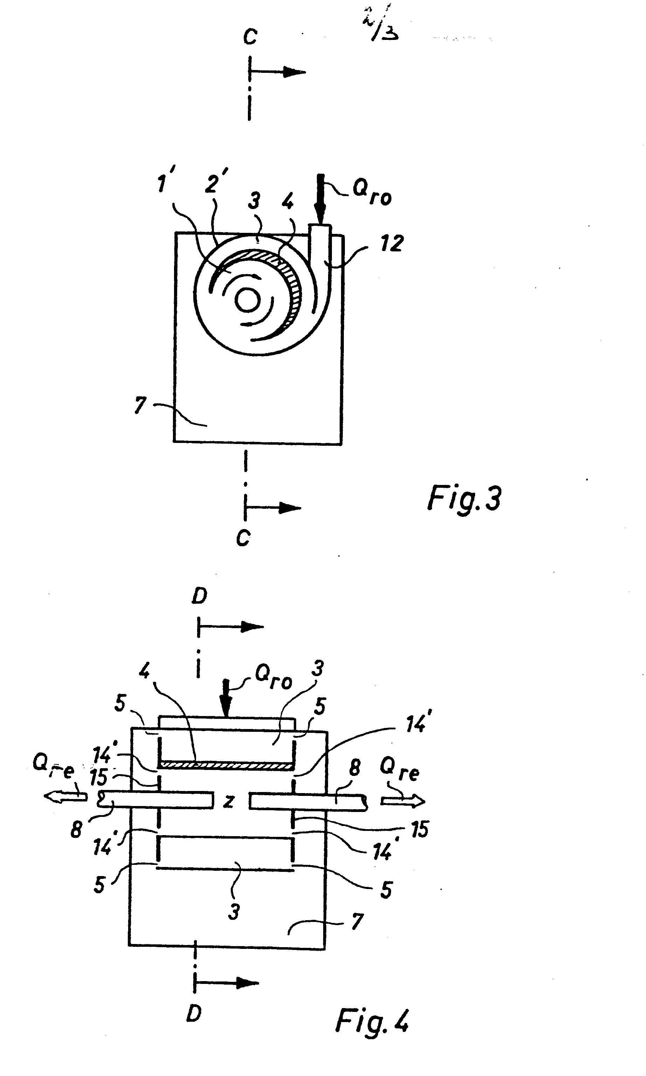

Die Fig.3 zeigt eine Wirbelkammer 1', die innerhalb einer gekrümmten Wandung 2'angeordnet und dort größtenteils von einem Umlaufkanal 3 umgeben ist. Der Umlaufkanal 3 wird gebildet durch
ein im Querschnitt bogenförmiges Teil 4, welches radial gesehen
mit etwa gleichbleibendem Abstand zur Wandung 2 angeordnet ist
und sich über die gesamte Kammerbreite erstreckt.

Wie aus Fig.4 hervorgeht, besitzen die axialen Begrenzungswände
des Umlaufkanals Austragschlitze 5, durch welche beim Betrieb der
Wirbelkammer abzuscheidende Medienanteile ausgetragen werden und
in den Bunker 7 gelangen. Ähnliche Austragschlitze 14' können
auch in den axialen Begrenzungswänden 15 der Wirbelkammer 1' angeordnet sein.

Bei dieser Variante entsteht ein strömungstechnisch sehr günstiger
Abscheidemechanismus für dispergierte Partikeln dadurch, daß im
Zentrum Z z.B. gemäß Fig.4 nur ein Teilvolumenstrom abgesaugt wird.
Hierdurch entstehen längere Verweilzeiten der beispielsweise feinen Staubpartikeln in der Wirbelkammer 1', so daß diese aus der
Feinabtrennzone um die Tauchrohre 8 leichter nach außen befördert
werden. Die Strömung im Umlaufkanal 3 reichert sich durch die
fortlaufende Rohgaszufuhr $Q_{ro}$ dermaßen mit z.B. Staubpartikeln
an, daß die Grenzbeladung überschritten wird und die Partikeln
daher kontinuierlich und leicht durch die Austragschlitze 5 ausgetragen werden. Hierdurch wird der abgesaugte Reingasanteil $Q_{re}$
qualitativ erheblich verbessert.

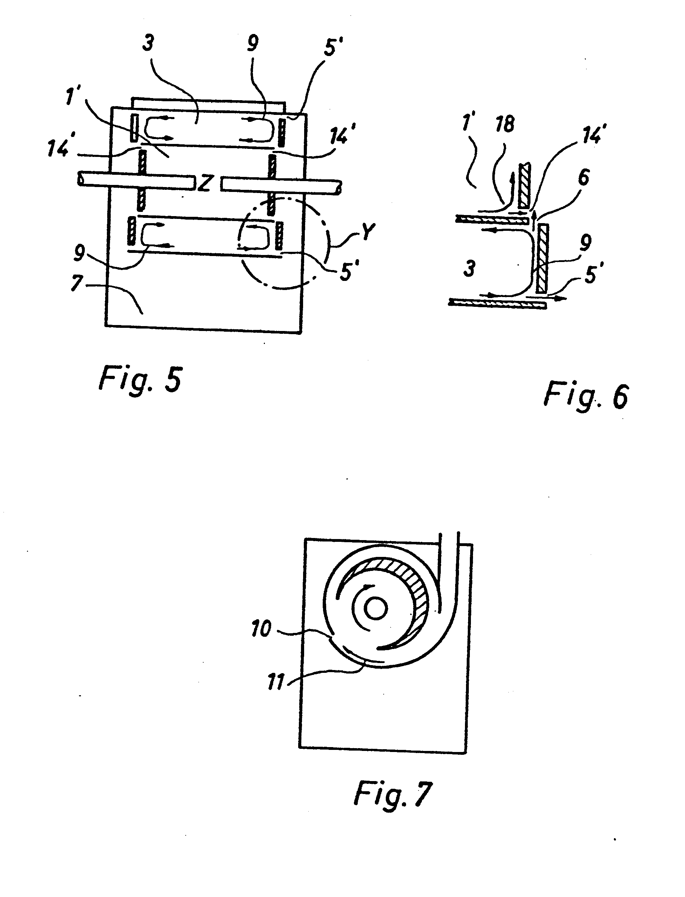

Aus Fig.5 geht hervor, daß Austragschlitze 5'und 14' in einer besonderen Ausgestaltung vorgesehen sind. Diese Ausgestaltung trägt
der Tatsache Rechnung, daß die Partikeln in etwa auf Tangenten
an die Sekundärströmung ausgetragen werden. Im Umlaufkanal 3 entsteht die Sekundärströmung 9. Aus der Fig.6 geht klar hervor,
daß durch die hier versetzte Anordnung der Begrenzungswände ein
weiterer Austragschlitz 6 vorgesehen werden kann.

Die Fig.7 zeigt den Querschnitt einer Wirbelkammer mit einem Schälschlitz 10. Dieser Schlitz ist so ausgebildet, daß er aus der Wandströmung 11 die Staubpartikel gleichsam herausschält.

hierzu 3 Blatt Zeichnungen

MESSERSCHMITT-BÖLKOW-BLOHM
GESELLSCHAFT
MIT BESCHRÄNKTER HAFTUNG
MÜNCHEN

Hamburg, 6.Juni 1979
8366
He

**Verfahren und Einrichtung zum Stofftrennen mittels Fliehkraft**

P a t e n t a n s p r ü c h e

1. Verfahren zum Abscheiden des spezifisch schwereren Anteils
aus einem Strom eines mit suspendierten Partikeln beladenen
Mediums mittels Fliehkraft, bei dem der Strom zunächst gekrümmt umgelenkt wird und anschließend im unmittelbaren Kontakt zum inneren Krümmungsbereich eine Wirbelscheidung mit einem in einer Wirbelkammer drehenden Wirbel und zentraler Absaugung des spezifisch leichteren Anteils erfolgt, wozu der
Strom in einer sich über die gesamte Kammerbreite erstreckenden Tangentialströmung in die Wirbelkammer eingeleitet wird
und gereinigtes Medium, befreit von den
abgetrennten Partikeln, die Wirbelkammer durch zwei spiegelbildlich in die Mitte der Wirbelkammer hineinragende Tauch-

-2-

rohre verläßt, dadurch g e k e n n z e i c h n e t , daß
die abzutrennenden Partikeln durch die Wirkung der Sekundärströmung mit axialer Richtungskomponente durch in den
axialen Begrenzungswänden angeordnete Öffnungen ohne eine
von außen wirkende Absaugung ausgetragen werden.

2. Verfahren nach Anspruch 1, dadurch g e k e n n z e i c h -
n e t , daß das Medium mindestens einen Schälschlitz (10)
passiert, durch den zusätzlich Partikeln ausgetragen werden.

3. Einrichtung zur Durchführung des Verfahrens nach Anspruch 1,
wobei die Wirbelkammer durch einen annähernd zylindrischen
Hohlraum gebildet ist, der in axialer Richtung durch parallele
Wände begrenzt wird, von denen spiegelbildlich zwei Tauchrohre in die axiale und radiale Mitte der Kammer hineinragen
und die Kammer weiterhin einen sich über die gesamte Breite
der Kammer erstreckenden tangentialen Einlaufkanal aufweist,
dadurch g e k e n n z e i c h n e t , daß die axialen Begrenzungswände der Wirbelkammer nahe der zylindrischen Wandung (2)
Austragschlitze (5) aufweisen.

4. Einrichtung nach Anspruch 3, dadurch g e k e n n z e i c h -
n e t , daß die zylindrische Wandung (2) mindestens einen
Schälschlitz (10) aufweist.

5. Einrichtung nach Anspruch 3 und/oder 4, dadurch g e k e n n -
z e i c h n e t , daß die Wirbelkammer ein sich über die gesamte Kammerbreite erstreckendes annähernd koaxial zu den Tauchrohren angeordnetes bogenförmiges Teil (4) aufweist.

6. Einrichtung nach Anspruch 5, dadurch g e k e n n z e i c h -
n e t , daß die axialen Begrenzungswände des durch das Teil (4)
gebildeten Umlaufkanals Austragschlitze (5,6) aufweisen.

7. Einrichtung nach einem oder mehreren der Ansprüche 3 bis 6, dadurch g e k e n n z e i c h n e t , daß die Austragschlitze
(5,6,14) mit einem Staubbunker in Verbindung stehen.

*Fig.1*

*Fig. 2*

0007458

1/2

8366

0007458

2/3

C

1' 2' 3 4 $Q_{ro}$

12

7

Fig.3

C

D

4 $Q_{ro}$ 3

5 5 14'

$Q_{re}$ 14' 8 $Q_{re}$
15 z
8 15
14' 14'

5 5

3

7

D

Fig.4

8366

Fig. 5

Fig. 6

Fig. 7

Europäisches
Patentamt

**EUROPÄISCHER RECHERCHENBERICHT**

Nummer der Anmeldung

EP 79 10 2172

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - A - 2 233 437 (MESSERSCHMITT BOLKOW-BLOHM) <br> * Figur 9; Seite 11, Zeilen 1-6 * <br> -- | 1 | B 01 D 45/12 <br> 21/26 <br> B 04 C 5/04 |
| A | DE - B - 1 058 976 (SCHWEIZERISCHE LOKOMOTIV- UND MASCHINENFABRIK) <br> ---- | | |

**RECHERCHIERTE SACHGEBIETE (Int. Cl. 3)**

B 01 D 45/00
21/00
B 04 C 5/00
7/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 12-10-1979 | BOGAERTS |

EPA form 1503.1 06.78